# EUROPEAN PATENT SPECIFICATION

(11) **EP 2 778 457 B1**
(45) Date of publication and mention of the grant of the patent: **17.05.2017**
(21) Application number: 12844362.9
(22) Date of filing: 25.10.2012
(51) Int. Cl.: F16D 13/52, F16D 13/54

(54) **POWER TRANSMISSION DEVICE**
STROMÜBERTRAGUNGSVORRICHTUNG
DISPOSITIF DE TRANSMISSION DE PUISSANCE

(30) Priority: 27.10.2011 JP 2011236447
(43) Date of publication of application: 17.09.2014
(73) Proprietor: Kabushiki Kaisha F.C.C., Hamamatsu-shi, Shizuoka 431-1394 (JP)
(72) Inventor: NONAKA, Masayuki, Hamamatsu-shi Shizuoka 431-1304 (JP); ANDO, Go, Hamamatsu-shi Shizuoka 431-1304 (JP); NAGASAKA, Hideki, Hamamatsu-shi Shizuoka 431-1304 (JP); OISHI, Hideyuki, Hamamatsu-shi Shizuoka 431-1304 (JP)
(74) Representative: Cohausz & Florack
(86) International application number: PCT/JP2012/077652
(87) International publication number: WO 2013/062063

(56) References cited:
- JP-A- H0 769 268
- JP-A- H08 128 462
- JP-A- 2001 050 294
- JP-A- 2004 232 807

## Description

### Field of the Invention

The present invention relates to a power transmitting apparatus for transmitting or cutting-off the rotational driving power of an engine inputted to an input member to or from an output member.

### Description of Background Art

In general, the power transmission apparatus for a motorcycle is intended to arbitrarily perform transmission or cutting-off of the driving power of the engine to or from a transmission and a driving wheel and comprises an input member connected to an engine-side, an output member connected to the transmission and driving wheel-side, and a clutch member connected to the output member. The power can be transmitted by press-contacting a plurality of driving-side clutch discs and driven-side clutch discs each other and cut off by releasing the press-contacting force acting on the driving-side clutch discs and driven-side clutch discs.

More particularly, the power transmitting apparatus of the prior art comprises a clutch housing rotatable together with an input member and mounted thereon a plurality of driving-side clutch discs, a plurality of driven-side clutch discs arranged between the driving-side clutch discs of the clutch housing alternately therewith, a clutch member connected to an output member, and a pressure member mounted on the clutch member axially movably relative to the clutch member for forcing the driving-side clutch discs and the driven-side cutch discs to be press-contacted each other and release the press-contacting force acting on them in accordance with axial movement relative to the clutch member, and is constructed so that it is able to transmit or cut off the driving power of the engine inputted to the input member to or from the output member by press-contacting the driving-side clutch discs with the driven-side clutch discs or releasing a press-contacting force acting on them.

As disclosed in Patent Document 1 below, there has been proposed a power transmitting apparatus which is provided with a press-contact assisting cam of normal-driving side for increasing the press-contacting force acting on the driving-side clutch discs and the driven-side clutch discs when a condition transmittable of the rotational driving power of the engine inputted to the input member is transmitted to the output member is attained. According to the power transmitting apparatus of the prior art, since it is possible to increase the press-contacting force between the driving-side clutch discs and the driven-side clutch discs by the press-contact assisting cam of normal-driving side, it is possible to maintain a desirable power transmitting performance although the power transmitting capacity is reduced by reducing the number of the driving-side and driven-side clutch discs or spring load and thus to reduce the size of the power transmitting apparatus.

### Documents of Prior Art

### Patent Document

Patent Document 1: JP 2005-325993 A

Also the Patent Document JP4081128462A discloses a apparatus with a press contact cam.

### Disclosure of the Invention

### Problems to be solved by the Invention

However, following problems reside in the power transmitting apparatus of the prior art when the kick-starter means operated by leg power of a driver is applied to the power transmitting apparatus. That is, since the rotational force of the kick-starting means is applied to the engine via the power transmitting apparatus through a direction of force transmitting path inverse to that of the normal power transmitting path from the engine, the press-contact assisting cam of normal-driving side cannot perform its function when the rotational force of the kick-starting means is applied to the engine.

In addition, since the power transmitting capacity is reduced under a condition in which the press-contact assisting cam of normal-driving side does not function in the power transmitting apparatus provided with the press-contact assisting cam in normal-driving side and having a small power transmitting capacity, it is afraid that slippage would be caused between the driving-side clutch discs and the driven-side clutch discs when trying to start the engine by the kick-starting means and thus desirable power transmission could not be achieved and the engine could not be surely started. In such a case, if the power transmitting capacity is increased in order to achieve a sure engine start by the kick-starting means, the size of the power transmitting apparatus would be increased.

It is, therefore, an object of the present invention to provide a power transmitting apparatus which can surely start an engine by a kick-starter means without increasing the power transmitting capacity and thus the size of the power transmitting apparatus.

### Means for achieving the object

For achieving the object of the present invention above, there is provided, according to claim 1, a power transmitting apparatus comprising a clutch housing rotatable together with an input member connected to an engine and mounted thereon a plurality of driving-side clutch discs; a clutch member connected to an output member; a plurality of driven-side clutch discs arranged between the driving-side clutch discs alternately therewith; a pressure member for forcing the driving-side clutch discs and the driven-side cutch discs to be press-contacted each other and to release the press-contacting force acting on them in accordance with approach or separation of the pressure member relative to the clutch member; and a kick-starter means being able to apply a rotational force to the output member to start the engine by transmitting the rotational force to the engine via the clutch member; and being adapted to be able to transmit or cut off the driving power of the engine inputted to the input member to or from the output member by press-contacting the driving-side clutch discs with the driven-side clutch discs or releasing a press-contacting force acting on them and further comprising a press-contact assisting cam of inverse-driving side for increasing the press-contacting force acting on the driving-side clutch discs and the driven-side clutch discs when the rotational force is applied to the output member by the kick starter means and a press-contact assisting cam of normal-driving side for increasing the press-contacting force acting on the driving-side clutch discs and the driven-side clutch discs when a condition in which the rotational driving power of the engine inputted to the input member can be transmitted to the output member is attained, wherein the press-contact assisting cam of inverse-driving side and the press-contact assisting cam of normal-driving side are formed by inclined surfaces oppositely formed on the clutch member and the pressure member, characterized in that one pair of the inclined surfaces are formed on opposite end surfaces of openings formed in either one of the clutch member and the pressure member, and the other pair of the inclined surfaces are formed on both end surfaces of a projected portions formed on the other of the clutch member and the pressure member and adapted to be passed through the openings, and wherein the inclined surface formed on the one end surface of the opening and the inclined surface formed on the one end surface of the projected portion constitute the press-contact assisting cam of inverse-driving side, and the inclined surface formed on the other end surface of the opening and the inclined surface formed on the other end surface of the projected portion constitute the press-contact assisting cam of normal-driving side.

The present invention of claim 2 is a power transmitting apparatus of claim 1 wherein intervention members are arranged in gaps between the end surfaces of the opening and the end surfaces of the projected portion after the pressure member has been assembled to the clutch member with passing the projected portions through the openings.

The present invention of claim 3 is a power transmitting apparatus of claim 1 or 2 wherein the driven-side clutch discs are arranged on both the clutch member and the pressure member.

### Effects of the Invention

According to the present invention of claim 1, since the power transmitting apparatus further comprises a press-contact assisting cam of inverse-driving side for increasing the press-contacting force acting on the driving-side clutch discs and the driven-side clutch discs when the rotational force is applied to the output member by the kick starter means, it is possible to surely perform the engine start by the kick-starter means without increasing the power transmitting capacity.

According to the present invention of claim 1, since the power transmitting apparatus further comprises a press-contact assisting cam of normal-driving side for increasing the press-contacting force acting on the driving-side clutch discs and the driven-side clutch discs when a condition in which the rotational driving power of the engine inputted to the input member can be transmitted to the output member is attained, it is possible not only to increase the press-contacting force between the driving-side clutch discs and the driven-side clutch discs with functioning of the press-contact assisting cam of inverse-driving side when the engine is started by the kick-starter means, but also to increase the press-contacting force between the driving-side clutch discs and the driven-side clutch discs with functioning of the press-contact assisting cam of normal-driving side when the clutch operation is performed (i.e. a condition in which the rotational driving power of the engine inputted to the input member can be transmitted to the output member is attained).

According to the present invention of claim 1, since the press-contact assisting cam of inverse-driving side and the press-contact assisting cam of normal-driving side are formed by inclined surfaces oppositely formed on the clutch member and the pressure member, it is possible to form the press-contact assisting cam of inverse-driving side and the press-contact assisting cam of normal-driving side in a simple structure.

According to the present invention of claim 1, since one pair of the inclined surfaces are formed on opposite end surfaces of openings formed in either one of the clutch member and the pressure member, and the other pair of the inclined surfaces are formed on both end surfaces of a projected portions formed on the other of the clutch member and the pressure member and adapted to be passed through the openings, and wherein the inclined surface formed on the one end surface of the opening and the inclined surface formed on the one end surface of the projected portion constitute the press-contact assisting cam of inverse-driving side, and the inclined surface formed on the other end surface of the opening and the inclined surface formed on the other end surface of the projected portion constitute the press-contact assisting cam of normal-driving side, it is possible to surely and smoothly perform the increase of press-contacting forces in both the press-contact assisting cam of inverse-driving side and the press-contact assisting cam of normal-driving side.

According to the present invention of claim 2, since intervention members are arranged in gaps between the end surfaces of the opening and the end surfaces of the projected portion after the pressure member has been assembled to the clutch member with passing the projected portions through the openings, it is possible to prevent formation of gaps between end surfaces of the openings and projected portions and thus to suppress generation of abnormal noise during clutch operation and engine start by kick-starter means and additionally to improve the operability of the power transmitting apparatus.

According to the present invention of claim 3, since the driven-side clutch discs are arranged on both the clutch member and the pressure member, it is possible to suppress generation of abnormal noise during clutch operation (during application of the press-contacting force to both the driving-side and driven-side clutch discs) and to improve the operability of the power transmitting apparatus.

### Brief description of the drawings

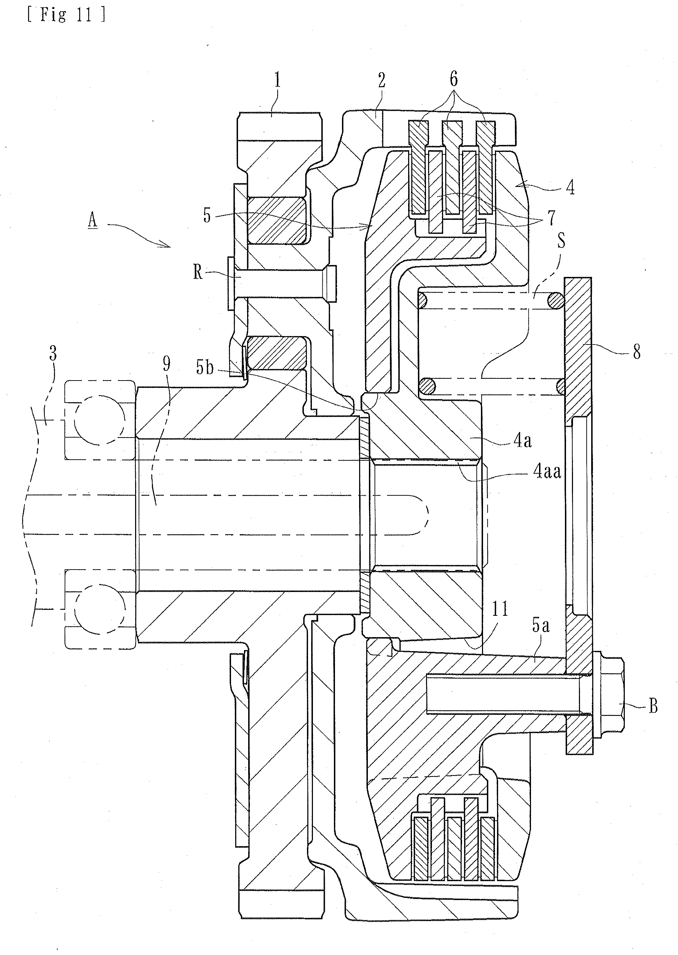

[Fig. 11] A longitudinal sectional view of a power transmitting apparatus of the present invention;
[Fig. 2] A front elevation view showing the power transmitting apparatus of Fig. 1;

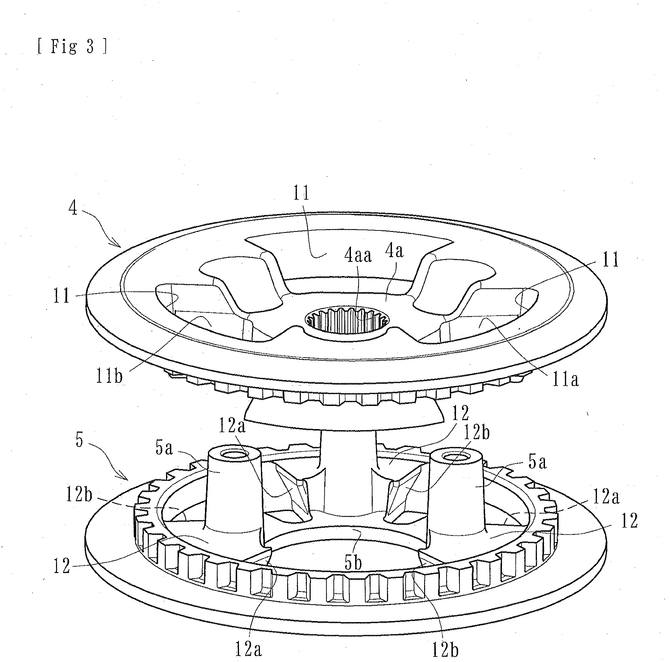

[Fig. 3] A perspective view showing a clutch member and a pressure member of the power transmitting apparatus of Fig. 1;

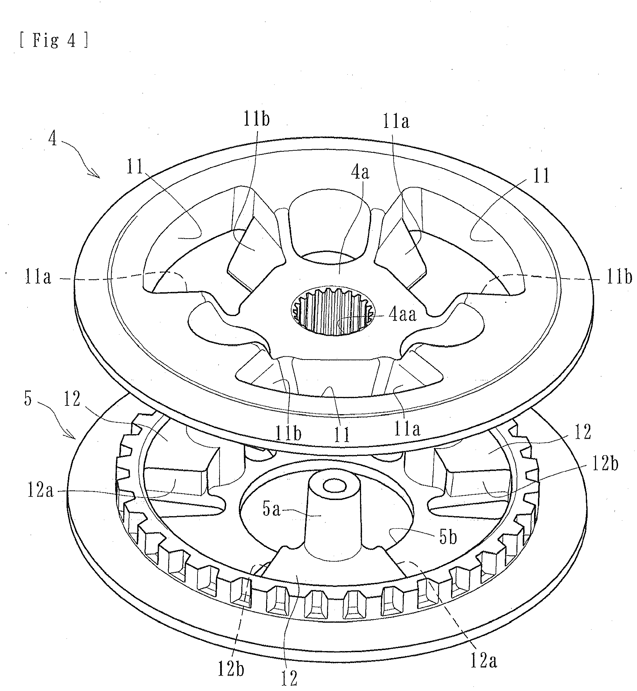

[Fig.4] A perspective view showing a clutch member and a pressure member of the power transmitting apparatus of Fig. 1;
[Fig.5] A schematic view showing a press-contact assisting cam of normal-driving side and a press-contact assisting cam of inverse-driving side of the power transmitting apparatus of Fig.1 under a condition in which the press-contact assisting cam of normal-driving side is functioned;
[Fig.6] A schematic view showing a press-contact assisting cam of normal-driving side and a press-contact assisting cam of inverse-driving side of the power transmitting apparatus of Fig. 1 under a condition in which the press-contact assisting cam of inverse-driving side is functioned;
[Fig.7] A schematic view showing a arrangement position of the kick-starter means of the power transmitting apparatus of Fig.1;
[Fig. 8] A front elevation view showing a power transmitting apparatus of other embodiment of the present invention (i.e. that provided with intervention members on both sides of the projected portions and the openings);
[Fig. 9] A partially longitudinal sectional schematic view of the power transmitting apparatus of Fig. 8;
[Fig. 10] A partially longitudinal sectional schematic view of a power transmitting apparatus of a further embodiment of the present invention (i.e. that provided with intervention member on one side of the projected portions and the openings);
[Fig. 11] A longitudinal sectional view of a power transmitting apparatus of a further embodiment of the present invention (i.e. that in which all the driven-side clutch discs are arranged on the pressure member); and
[Fig. 12] A longitudinal sectional view of a power transmitting apparatus of a further embodiment of the present invention (i.e. that in which all the driven-side clutch discs are arranged on the clutch member).

### A mode for carrying out the Invention

Preferable embodiments of the present invention will be hereinafter described with reference to the accompanying drawings.

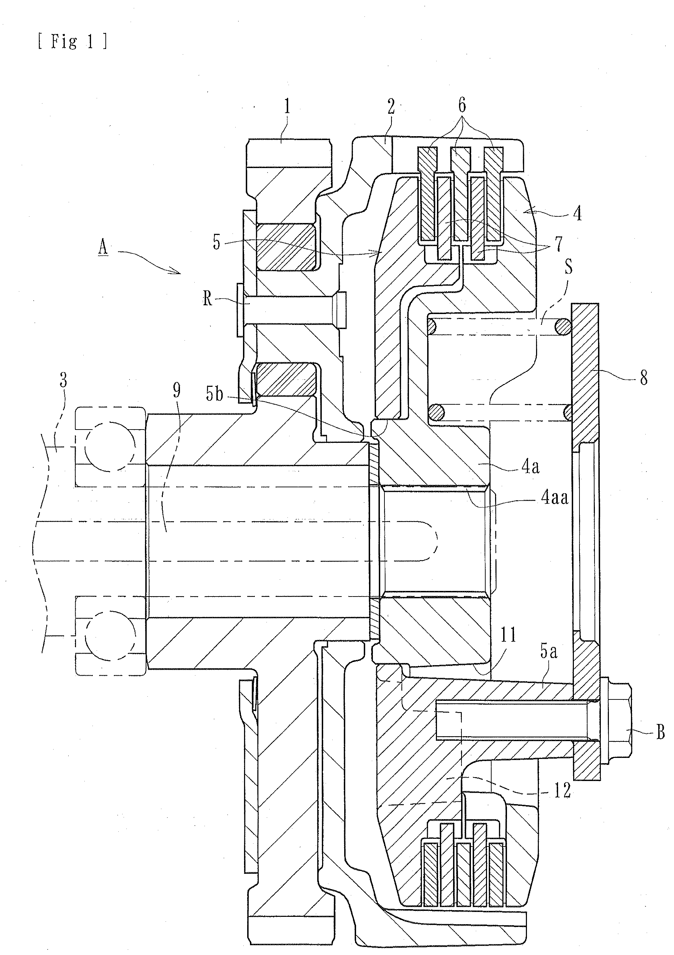

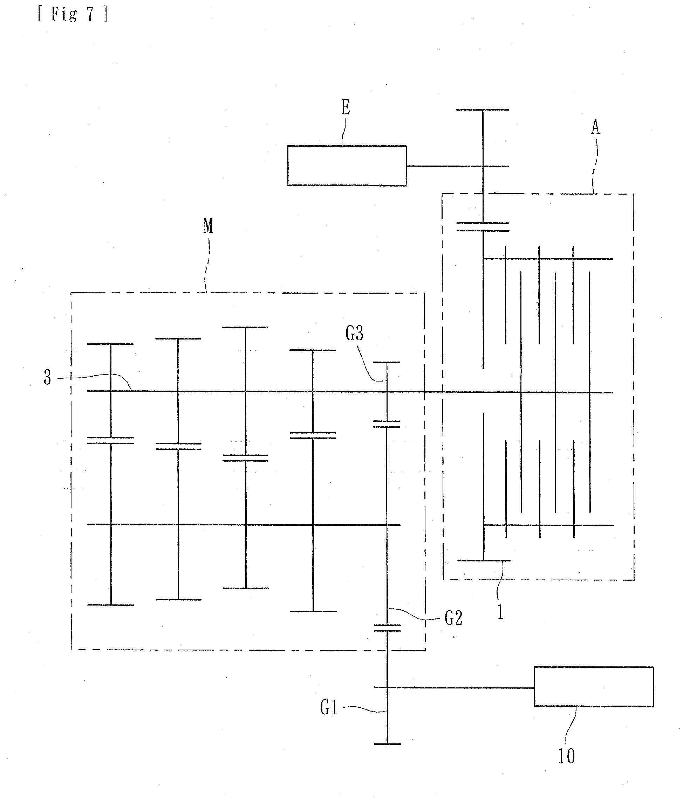

A power transmitting apparatus "A" of a preferable embodiment of the present invention is mounted on a vehicle such as a motorcycle to arbitrarily transmit or cut off the driving power of an engine "E" to or from a transmission "M" or driving wheel (see Fig. 7). As shown in Fig. 1, the power transmitting apparatus "A" mainly comprises a clutch housing 2 on which a gear 1 as an input member is mounted, a clutch member 4 connected to a shaft 3 as an output member, a pressure member 5 mounted on the clutch member 4 at its right-hand end (in view of Fig. 1), driving-side clutch discs 6 connected to the clutch housing 2, and driven-side clutch discs 7 connected to the clutch member 4 and the pressure member 5.

The gear 1 can be rotated around the shaft 3 by the driving power (rotational power) transmitted from the engine "E" and connected to the clutch housing 2 via rivets "R" etc. The clutch housing 2 is formed as a cylindrical casing opened at its right-hand end seen from Fig.1 and a plurality of driving-side clutch discs 6 are mounted on the inner circumference of the clutch housing 2. Each of the driving-side clutch discs 6 comprises a substantially annular plate and is adapted to be rotated together with the clutch housing 2 and axially slidable (left-hand and right-hand directions seen from Fig. 1).

The clutch member 4 comprises a member arranged within the clutch housing 2 and formed with a cylindrical portion 4a at the center thereof. The cylindrical portion 4a is formed with a splined fitting aperture 4aa for receiving a splined tip end of the shaft 3. This allows axial movement of the clutch member 4 and enables rotation of the shaft 3 due to rotation of the clutch member 4. The pressure member 5 is axially slidably mounted on the cylindrical portion 4a of the clutch member 4.

The pressure member 5 is formed with a through aperture 5b at the center thereof for receiving the cylindrical portion 4a of the clutch member 4 so as to be mounted on the clutch member 4. The pressure member 5 is integrally formed with a plurality (three in this embodiment) of boss portions 5a arranged on a same circle and adapted to be passed through openings 11 formed in the clutch member 4 when the clutch member 4 and the pressure member 5 are assembled together as described later more in detail.

In addition, an annular member 8 is secured by bolts "B" on the tip end of the boss portions 5a. A plurality (three in this embodiment) of clutch springs "S" are mounted on the annular member 8 on a same circle and these springs "S" usually urge the clutch member 4 toward the pressure member 5 (left-hand in Fig. 1). Accordingly, the driving-side clutch discs 6 are usually press-contacted with the driven-side clutch discs 7 and thus the driving power of the engine "E" can be transmitted to the shaft 3.

The outer circumferences of the clutch member 4 and the pressure member 5 are formed with axially extending splines on which the driven-side clutch discs 7 are engaged. That is, according to this embodiment shown in Fig. 1, the driven-side clutch discs 7 are arranged on both the clutch member 4 and the pressure member 5. The driven-side clutch discs 7 are formed of substantially annular plates and arranged alternately with the driving-side clutch discs 6 to form a laminated structure. The driven-side clutch discs 7 are mounted rotatably together with clutch member 4 and pressure member 5 and also axially movably.

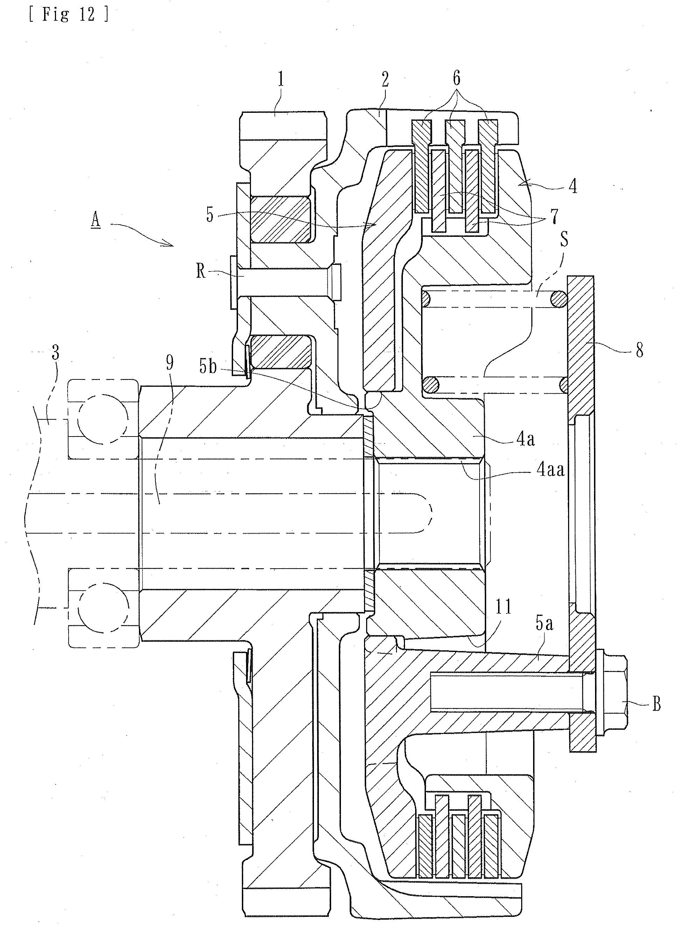

Although it is shown in the embodiment of Fig. 1 that the driven-side clutch discs 7 are mounted on both the clutch member 4 and the pressure member 5, it is possible to mount all the driven-side clutch discs 7 on the pressure member 5 as shown in Fig. 11 or on the clutch member 4 as shown in Fig. 12. In addition, in case that the driven-side clutch discs 7 are mounted on both the clutch member 4 and the pressure member 5, the rate of the number of the driven-side clutch discs 7 to be mounted on the clutch member 4 and the pressure member 5 can be arbitrarily determined.

On the other hand, an axially extending push rod 9 is arranged in the shaft 3. The push rod 9 can be projected toward the right-hand in Fig. 1 with a driver of a vehicle operating an operation means to move the clutch member 4 relative to the pressure member 5 against the force of clutch springs "S" and separate them. Thus the press-contacting force acting on the driving-side clutch discs 6 and the driven-side clutch discs 7 is released and thus the rotational driving power inputted to the gear 1 and the clutch housing 2 cannot be transmitted to the clutch member 4 and the shaft 3.

That is, the driving power of the engine "E" can be transmitted to the shaft 3 with the driving-side clutch discs 6 and the driven-side clutch discs 7 being press-contacted by the urging force of the clutch springs "S", on the contrary, the driving power of the engine "E" cannot be transmitted to the shaft 3 when the clutch member 4 is separated from pressure member 5 by clutch operation to release the press-contacting force between the the driving-side clutch discs 6 and the driven-side clutch discs 7. In this way, the pressure member 5 forces the driving-side clutch discs 6 and the driven-side cutch discs 7 to be press-contacted each other and to release the press-contacting force acting on them in accordance with approach or separation of the pressure member 5 relative to the clutch member 4.

As shown in Fig. 7, a kick-starter means 10 is able to apply a rotational force to the shaft (i.e. the output member) 3 to start the engine "E" by transmitting the rotational force to the engine "E" via the clutch member 4. That is, the kick-starter means 10 is operated by a driver of vehicle (e.g. motorcycle) to start the engine "E" and connected via gears G1∼G3 to a transmission "M" connected to the power transmitting apparatus "A". The rotational force applied to the kick-starter means 10 by a driver is transmitted to the shaft 3 via the gears G1∼G3, and further to the clutch member 4, clutch housing 2, the gear (i.e. the input member) 1 and finally a crankshaft (not shown) of the engine "E" to start it.

According to the present invention, a press-contact assisting cam of normal-driving side and a press-contact assisting cam of inverse-driving side. The press-contact assisting cam of normal-driving side is a cam for increasing the press-contacting force between the driving-side clutch discs 6 and the driven-side clutch discs 7 under a condition in which the driving power from the engine "E" inputted to the gear (i.e. the input member) 1 can be transmitted to the shaft (i.e. output member) 3, on the contrary, the press-contact assisting cam of inverse-driving side is a cam for increasing the press-contacting force between the driving-side clutch discs 6 and the driven-side clutch discs 7 under a condition in which the rotational force from the kick-starter means 10 inputted to the shaft (i.e. the output member) 3 can be transmitted to the engine "E".

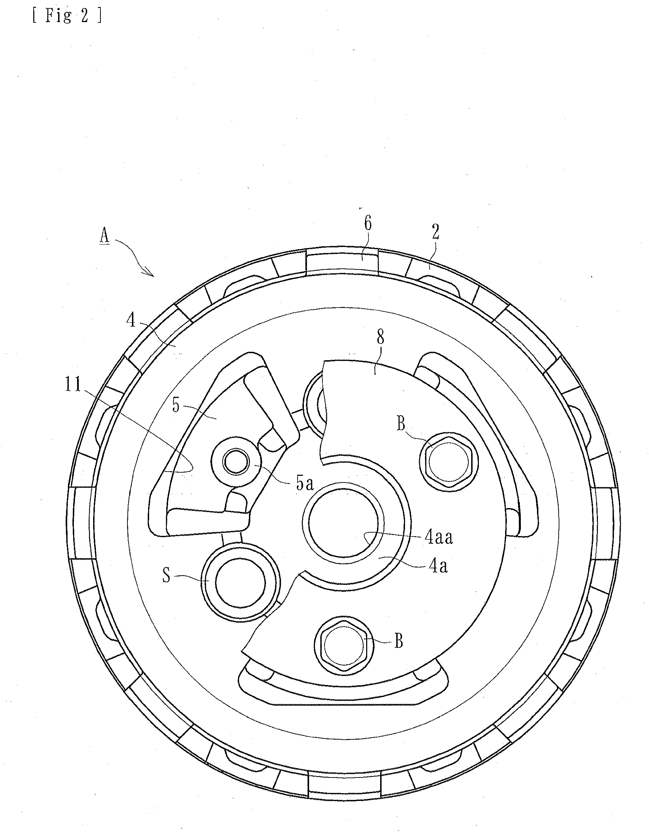

The press-contact assisting cam of normal-driving side and the press-contact assisting cam of inverse-driving side are formed by paired inclined surfaces formed respectively on openings 11 of the clutch member 4 and the projected portions 12 of the pressure member 5 (see Figs. 2∼4). More particularly, the inclined surfaces 11a and 11b are formed on opposite end surfaces of each opening 11 of the clutch member 4, and inclined surfaces 12a and 12b are formed on opposite end surfaces of each projected portion 12. In such a situation, a paired inclined surfaces (e.g. the inclined surface 11a formed on one end surface of the opening 11 and the inclined surface 12a formed on one end surface of the projected portion 12) form the press-contact assisting cam of inverse-driving side, and a paired inclined surfaces (e.g. the inclined surface 11b formed on the other end surface of the opening 11 and the inclined surface 12b formed on the other end surface of the projected portion 12) form the press-contact assisting cam of normal-driving side.

The openings 11 are formed on the clutch member 4 in a plural number (three in the illustrated embodiment) equidistantly on a same circle. The projected portions 12 are arranged on the pressure 5 at positions corresponding to those of the openings 11 and formed with boss portions 5a projected from the projected portions 12 substantially at the center thereof. When the clutch member 4 and pressure 5 are assembled together, the projected portions 12 are passed through the openings 11 and the boss portions 5a are projected therefrom.

As previously described, one pair of the inclined surfaces 11a, 11b are formed on opposite end surfaces of openings 11 formed in either one of the clutch member 4 and the pressure member 5, and the other pair of the inclined surfaces 12a, 12b are formed on both end surfaces of a projected portions 12 formed on the other of the clutch member 4 and the pressure member 5 and adapted to be passed through the openings 11. The inclined surface 11a formed on the one end surface of the opening 11 and the inclined surface 12a formed on the one end surface of the projected portion 12 constitute the press-contact assisting cam of inverse-driving side, and the inclined surface 11b formed on the other end surface of the opening 11 and the inclined surface 12b formed on the other end surface of the projected portion 12 constitute the press-contact assisting cam of normal-driving side. In place of the illustrated embodiment, it is possible to form the openings 11 in the pressure member 5 and the projections 12 in the clutch member 4.

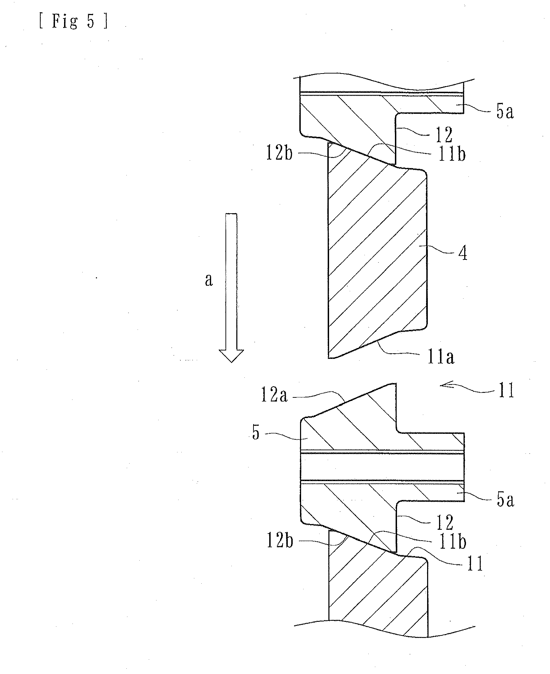

As shown in Fig. 5, under a condition in which the driving power of the engine "E" inputted to the gear (input member) 1 is transmitted to the shaft (output member) 3 (i.e. when the driving power of the engine "E" is transmitted to the shaft 3 via the pressure 5 and the clutch member 4), the inclined surfaces 11b of the opening 11 of the clutch member 4 is abutted with the inclined surfaces 12b of the projected portion 12 of the pressure member 5 and accordingly the pressure-contact assisting cam of normal-driving side functions to urge the clutch member 4 against the pressure member 5 and thus to increase the press-contacting force between the driving-side clutch discs 6 and the driven-side clutch discs 7.

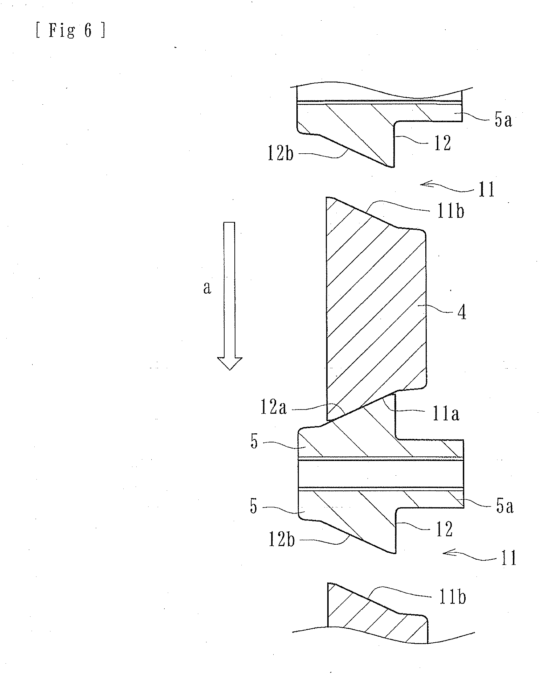

On the contrary, when the rotational force is applied to the shaft (output member) 3 by the kick-starter means 10 (i.e. when the rotational force applied to the shaft 3 by the kick-starter means 10 is transmitted to the engine "E" via the clutch member 4), the inclined surfaces 11a of the opening 11 of the clutch member 4 is abutted with the inclined surfaces 12a of the projected portion 12 of the pressure member 5 as shown in Fig. 6 and accordingly the pressure-contact assisting cam of inverse-driving side functions to urge the clutch member 4 against the pressure member 5 and thus to increase the press-contacting force between the driving-side clutch discs 6 and the driven-side clutch discs 7. An arrow "a" in Fig. 5 shows the rotational direction of the pressure member 5 and an arrow "a" in Fig. 6 shows the rotational direction of the clutch member 6.

According to the present invention, since the power transmitting apparatus is provided with the press-contact assisting cam of inverse-driving side (i.e. inclined surfaces 11a and 12a) for increasing the press-contacting force between the driving-side clutch discs 6 and the driven-side clutch discs 7 when the rotational force is applied to the shaft (output member) 3 by the kick-starter means 10, it is possible to surely start the engine "E" by the kick-starter means 10 without adopting any means for increasing the power transmitting capacity such as increase of urging force of the clutch springs "S" or increase of number of the driving-side clutch discs 6 and the driven-side clutch discs 7.

According to the present invention, since not only the press-contact assisting cam of normal-driving side (inclined surfaces 11b and 12b) but also the press-contact assisting cam of inverse-driving side, it is possible to increase the press-contacting force between the driving-side clutch discs 6 and the driven-side clutch discs 7 both in normal power transmitting case (e.g. in case of clutch operation) and in inverse power transmitting case (e.g. in case of kick-starting operation).

In addition, since the press-contact assisting cam of inverse-driving side and the press-contact assisting cam of normal-driving side are constituted by oppositely arranged inclined surface pairs (11a, 12a and 11b, 12b) formed on the clutch member 4 and pressure member 5, these cams can be manufactured by simple structures.

Furthermore, since one pair of the inclined surfaces (11a, 11b) are formed on opposite end surfaces of openings 11 formed in either one of the clutch member 4 and the pressure member 5, and the other pair of the inclined surfaces (12a, 12b) are formed on both end surfaces of a projected portions 12 formed on the other of the clutch member 4 and the pressure member 5 and adapted to be passed through the openings 11, and the inclined surface 11a formed on the one end surface of the opening 11 and the inclined surface 12a formed on the one end surface of the projected portion 12 constitute the press-contact assisting cam of inverse-driving side, and the inclined surface 11b formed on the other end surface of the opening 11 and the inclined surface 12b formed on the other end surface of the projected portion 12 constitute the press-contact assisting cam of normal-driving side, it is possible to surely and smoothly perform the increase of press-contacting forces in both the press-contact assisting cam of inverse-driving side and the press-contact assisting cam of normal-driving side.

In addition, according to the illustrated embodiment, since the driven-side clutch discs 7 are mounted both on the clutch member 4 and pressure member 5, the driving power can be transmitted with being distributed to the clutch member 4 and the pressure member 5, it is possible to prevent generation of abnormal noise and to improve the operability of the power transmitting apparatus.

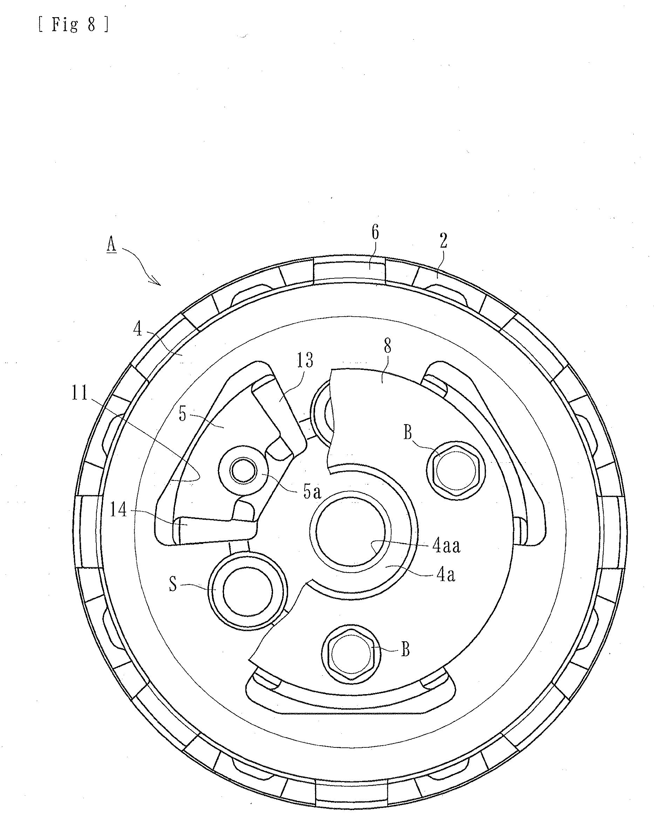

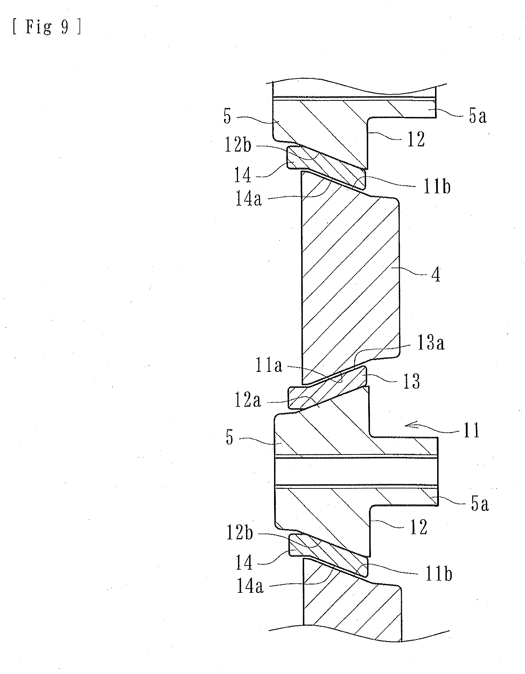

As shown in Figs. 8 and 9, it is possible to arrange intervention members 13, 14 in gaps between the end surfaces of the opening 11 and the end surfaces of the projected portion 12 after the pressure member 5 has been assembled to the clutch member 4 with passing the projected portions 12 through the openings 11. In this case, an inclined surface 13a of the intervention member 13 is formed at a position opposed to the inclined surface 11a of one end surface of the opening 11 and press-contact assisting cam of inverse-driving side is formed by the inclined surfaces 11a, 13a. Similarly, an inclined surface 14a of the intervention member 14 is formed at a position opposed to the inclined surface 11b of the other end surface of the opening 11 and press-contact assisting cam of normal-driving side is formed by the inclined surfaces 11b, 14a.

According to this embodiment, since the intervention members 13, 14 are arranged in gaps between the end surfaces of the opening 11 and the end surfaces of the projected portion 12 after the pressure member 5 has been assembled to the clutch member 4 with passing the projected portions 12 through the openings 11, it is possible to prevent formation of useless gaps between end surfaces of the openings 11 and the projected portions 12 and thus to suppress generation of abnormal noise during clutch operation and engine start by the kick-starter means 10 and also to improve the operability of the power transmitting apparatus.

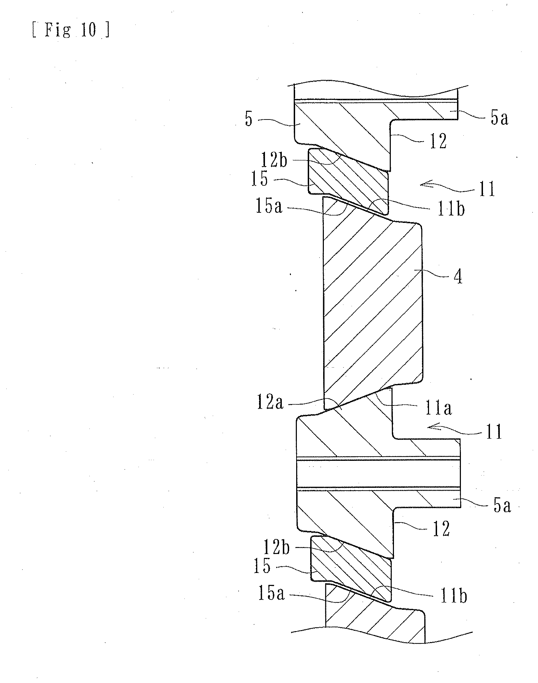

Furthermore, it is possible as shown in Fig. 10 to arrange one intervention member 15 only in a gap between the other end surface of the opening 11 and the other end surface of the projected portion 12 after the pressure member 5 has been assembled to the clutch member 4 with passing the projected portions 12 through the openings 11. In this case, an inclined surface 15a of the intervention member 15 is formed at a position opposed to the inclined surface 11b of the other end surface of the opening 11 and press-contact assisting cam of normal-driving side is formed by the inclined surfaces 11b, 15a. Similarly, a press-contact assisting cam of inverse-driving side is formed by the inclined surface 12a of one end surface 12a of the projected portion 12 and the inclined surface 11a of the other end surface of the opening 11.

Although several embodiments of the present invention have been described, the present invention is not limited to these embodiments. For example, the present invention may be applied to a power transmitting apparatus which is not provided with the press-contact assisting cam of normal driving side and provided with only the press-contact assisting cam of inverse-driving side. In addition, although the press-contact assisting cam of inverse-driving side and the press-contact assisting cam of the normal driving side are formed by paired inclined surfaces formed integrally with the clutch member and the pressure member, the inclined surfaces can be formed on members separate from the clutch member and the pressure member. Furthermore, the power transmitting apparatus of the present invention can be applied to other vehicles provided with multiple disc clutch such as automobiles, three or four-wheeled buggies or multi-purpose machines than motorcycles.

### Applicability in industries

The present invention can be applied to the power transmitting apparatus which is provided with the press-contact assisting cam of inverse-driving side for increasing the press-contacting force between the driving-side clutch discs and the driven-side clutch discs when the rotational force is applied to the output member by the kick-starter means.

### Description of reference numerals

- 1: gear (input member)
- 2: clutch housing
- 3: shaft (output member)
- 4: clutch member
- 5: pressure member
- 6: driving-side clutch disc
- 7: driven-side clutch disc
- 8: annular member
- 9: push rod
- 10: kick-starter means
- 11: opening
- 12: projected portion
- 11a, 12a: inclined surface (press-contact assisting cam of inverse-driving side)
- 11b, 12b: inclined surface (press-contact assisting cam of normal-driving side)
- 13∼15: intervention member

## Claims

1. A power transmitting apparatus comprising:
a clutch housing (2) rotatable together with an input member (1) connected to an engine "E" and mounted thereon a plurality of driving-side clutch discs (6);
a clutch member (4) connected to an output member (3);
a plurality of driven-side clutch discs (7) arranged between the driving-side clutch discs (6) alternately therewith;
a pressure member (5) for forcing the driving-side clutch discs (6) and the driven-side cutch discs (7) to be press-contacted each other and to release the press-contacting force acting on them in accordance with approach or separation of the pressure member (5) relative to the clutch member (4); and
a kick-starter means (10) being able to apply a rotational force to the output member (3) to start the engine "E" by transmitting the rotational force to the engine "E" via the clutch member (4),
the power transmitting apparatus
being adapted to be able to transmit or cut off the driving power of the engine inputted to the input member (1) to or from the output member (3) by press-contacting the driving-side clutch discs (6) with the driven-side clutch discs (7) or releasing a press-contacting force acting on them
and further comprising:
a press-contact assisting cam of inverse-driving side for increasing the press-contacting force acting on the driving-side clutch discs (6) and the driven-side clutch discs (7) when the rotational force is applied to the output member (3) by the kick starter means (10) and
a press-contact assisting cam of normal-driving side for increasing the press-contacting force acting on the driving-side clutch discs (6) and the driven-side clutch discs (7) when a condition in which the rotational driving power of the engine "E" inputted to the input member can be transmitted to the output member is attained,
wherein the press-contact assisting cam of inverse-driving side and the press-contact assisting cam of normal-driving side are formed by inclined surfaces (11a, 12a; 11b,12b) oppositely formed on the clutch member (4) and the pressure member (5),
**characterized in that** one pair of the inclined surfaces (11a,11b) are formed on opposite end surfaces of openings (11) formed in either one of the clutch member (4) and the pressure member (5), and the other pair of the inclined surfaces (12a, 12b) are formed on both end surfaces of a projected portions (12) formed on the other of the clutch member (4) and the pressure member (5) and adapted to be passed through the openings (11), and wherein the inclined surface (11a) formed on the one end surface of the opening (11) and the inclined surface (12a) formed on the one end surface of the projected portion (12) constitute the press-contact assisting cam of inverse-driving side, and the inclined surface (11b) formed on the other end surface of the opening (11) and the inclined surface (12b) formed on the other end surface of the projected portion (12) constitute the press-contact assisting cam of normal-driving side.

2. A power transmitting apparatus of claim 1 wherein intervention members (13, 14 or 15) are arranged in gaps between the end surfaces of the opening (11) and the end surfaces of the projected portion (12) after the pressure member (5) has been assembled to the clutch member (4) with passing the projected portions (12) through the openings (11).

3. A power transmitting apparatus of claim 1 or 2 wherein the driven-side clutch discs (7) are arranged on both the clutch member (4) and the pressure member (5).

## Patentansprüche

1. Leistungsübertragungsvorrichtung, umfassend:
ein Kupplungsgehäuse (2), das zusammen mit einem Eingangselement (1), das mit einem Motor "E" verbunden ist, und darauf montierten mehreren antriebsseitigen Kupplungsscheiben (6) drehbar ist,
ein Kupplungselement (4), das mit einem Ausgangselement (3) verbunden ist,
mehrere abtriebsseitige Kupplungsscheiben (7), die zwischen den antriebsseitigen Kupplungsscheiben (6) und abwechselnd mit diesen angeordnet sind,
ein Druckelement (5) zum Zwingen der antriebsseitigen Kupplungsscheiben (6) und der abtriebsseitigen Kupplungsscheiben (7) in Druckkontakt miteinander und zum Lösen der auf sie wirkenden Druckkontaktkraft gemäß einer Annäherung oder Trennung des Druckelements (5) relativ zu dem Kupplungselement (4), und
eine Kickstartereinrichtung (10), die in der Lage ist, eine Drehkraft an das Ausgangselement (3) anzulegen, um den Motor "E" durch Übertragen der Drehkraft an den Motor "E" über das Kupplungselement (4) zu starten,
wobei die Leistungsübertragungsvorrichtung derart ausgelegt ist, dass sie in der Lage ist, die Antriebsleistung des Motors, die in das Eingangselement (1) eingegeben wird, an das Ausgangselement (3) zu übertragen oder von ihm oder
zu trennen, durch Druckkontaktieren der antriebsseitigen Kupplungsscheiben (6) mit den abtriebsseitigen Kupplungsscheiben (7) oder Lösen einer auf sie wirkenden Druckkontaktkraft,
und ferner umfassend:
eine Druckkontaktunterstützungsnocke einer Inversantriebsseite zum Erhöhen der Druckkontaktkraft, die auf die antriebsseitigen Kupplungsscheiben (6) und die abtriebsseitigen Kupplungsscheiben (7) wirkt, wenn die Drehkraft an das Ausgangselement (3) durch die Kickstartereinrichtung (10) angelegt wird, und
eine Druckkontaktunterstützungsnocke einer Normalantriebsseite zum Erhöhen der Druckkontaktkraft, die auf die antriebsseitigen Kupplungsscheiben (6) und die abtriebsseitigen Kupplungsscheiben (7) wirkt, wenn ein Zustand, in dem die Drehantriebsleistung des Motors "E", die in das Eingangselement eingegeben wird, an das Ausgangselement übertragen werden kann, erreicht ist,
wobei die Druckkontaktunterstützungsnocke der Inversantriebsseite und die Druckkontaktunterstützungsnocke der Normalantriebsseite durch geneigte Flächen (11a, 12a; 11b,12b) ausgebildet sind, die gegenüberliegend an dem Kupplungselement (4) und dem Druckelement (5) ausgebildet sind,
**dadurch gekennzeichnet, dass** ein Paar der geneigten Flächen (11a, 11b) auf entgegengesetzten Stirnflächen von Öffnungen (11) ausgebildet ist, die in einem von dem Kupplungselement (4) und dem Druckelement (5) ausgebildet sind, und
das andere Paar der geneigten Flächen (12a, 12b) auf beiden Stirnflächen vorspringender Abschnitte (12) ausgebildet ist, die an dem anderen von dem Kupplungselement (4) und dem Druckelement (5) ausgebildet und derart ausgelegt sind, dass sie durch die Öffnungen (11) hindurchgeführt werden, und
wobei die geneigte Fläche (11a), die auf der einen Stirnfläche der Öffnung (11) ausgebildet ist, und die geneigte Fläche (12a), die auf der einen Stirnfläche des vorspringenden Abschnitts (12) ausgebildet ist, die Druckkontaktunterstützungsnocke der Inversantriebsseite bilden, und die geneigte Fläche (11b), die auf der anderen Stirnfläche der Öffnung (11) ausgebildet ist, und die geneigte Fläche (12b), die auf der anderen Stirnfläche des vorspringenden Abschnitts (12) ausgebildet ist, die Druckkontaktunterstützungsnocke der Normalantriebsseite bilden.

2. Leistungsübertragungsvorrichtung nach Anspruch 1, wobei Interventionselemente (13,14 oder 15) in Spalten zwischen den Stirnflächen der Öffnung (11) und den Stirnflächen des vorspringenden Abschnitts (12) angeordnet sind, nachdem das Druckelement (5) mit dem Kupplungselement (4) zusammengefügt wurde, indem die vorspringenden Abschnitte (12) durch die Öffnungen (11) hindurchgeführt wurden.

3. Leistungsübertragungsvorrichtung nach Anspruch 1 oder 2, wobei die abtriebsseitigen Kupplungsscheiben (7) sowohl auf dem Kupplungselement (4) als auch dem Druckelement (5) angeordnet sind.

## Revendications

1. Appareil de transmission d'énergie, comprenant:
un carter d'embrayage (2) en rotation avec un élément d'entrée (1) connecté à un moteur «E» et présentant une série de disques d'embrayage côté entrainement (6);
un élément d'embrayage (4) connecté à un élément de sortie (3);
une série de disques d'embrayage côté entrainé (7) agencés entre les disques d'embrayage côté entrainement (6), alternativement;
un élément de pression (5) pour forcer le contact entre les disques d'embrayage côté entrainement (6) et les disques d'embrayage côté entrainé (7) et pour libérer la force de contact agissant sur ceux-ci en fonction de l'approche ou de la séparation de l'élément de pression (5) par rapport à l'élément d'embrayage (4), et
un démarreur au pied (10) capable d'appliquer une force de rotation sur l'élément de sortie (3) afin de démarrer le moteur «E» par transmission de la force de rotation au moteur «E» via l'élément d'embrayage (4),
l'appareil de transmission d'énergie étant destiné à transmettre ou à interrompre l'énergie d'entrainement du moteur introduite par l'élément d'entrée (1) ou depuis l'élément de sortie (3) par contact des disques d'embrayage côté entrainement (6) et des disques d'embrayage côté entrainé (7) ou libération de la force de contact agissant sur ceux-ci,
et comprenant en outre:
une came d'assistance au contact du côté d'entrainement inverse pour accroitre la force de contact agissant sur les disques d'embrayage côté entrainement (6) et les disques d'embrayage côté entrainé (7) lorsque la force de rotation est appliquée à l'élément de sortie (3) par le démarreur au pied (10), et
une came d'assistance au contact du côté d'entrainement normal pour accroitre la force de contact agissant sur les disques d'embrayage côté entrainement (6) et les disques d'embrayage côté entrainé (7) lorsque l'on atteint un état dans lequel l'énergie d'entrainement par rotation du moteur «E» introduite par l'élément d'entrée peut être transmise à l'élément de sortie,
où la came d'assistance au contact du côté d'entrainement inverse et la came d'assistance au contact du côté d'entrainement normal sont formées par des surfaces inclinées (11a, 12a; 11b, 12b) formées de manière opposée sur l'élément d'embrayage (4) et l'élément de pression (5),
**caractérisé en ce qu'**une paire de surfaces inclinées (11a, 11b) sont formées sur les surfaces terminales opposées des ouvertures (11) formées dans l'un de l'élément d'embrayage (4) et l'élément de pression (5), et l'autre paire des surface inclinées (12a, 12b) sont formées sur les deux surfaces terminales de parties projetées (12) formées sur l'autre parmi l'élément d'embrayage (4) et l'élément de pression (5) et ajusté pour passer dans les ouvertures (11), et où la surface inclinée (11a) formée sur une surface terminale de l'ouverture (11) et la surface inclinée (12a) formée sur une surface terminale de la partie projetée (12) constitue la came d'assistance au contact du côté d'entrainement inverse, et la surface inclinée (11b) formée sur l'autre surface terminale de l'ouverture (11) et la surface inclinée (12b) formée sur l'autre surface terminale de la partie projetée (12) constitue la came d'assistance au contact du côté d'entrainement normal.

2. Appareil de transmission d'énergie selon la revendication 1, où les éléments d'intervention (13,14 ou 15) sont agencés dans des vides formés entre les surfaces terminales de l'ouverture (11) et les surfaces terminales de la partie projetée (12) après que l'élément de pression (5) a été assemblé à l'élément d'embrayage (4) avec passage des parties projetées (12) dans les ouvertures (11).

3. Appareil de transmission d'énergie selon la revendication 1 ou 2, où les disques d'embrayage côté entrainé (7) sont agencés sur l'élément d'embrayage (4) ainsi que sur l'élément de pression (5).
